# EUROPÄISCHE PATENTSCHRIFT

(11) **EP 3 063 749 B1**
(45) Veröffentlichungstag und Bekanntmachung des Hinweises auf die Patenterteilung: **31.05.2017**
(21) Anmeldenummer: 14757946.0
(22) Anmeldetag: 01.09.2014
(51) Int. Cl.: G08G 1/14, B60W 30/06, G05D 1/02

(54) **PARKRAUMVERWALTUNGSSYSTEM**
PARKING SPACE MANAGEMENT SYSTEM
SYSTÈME DE GESTION D'ESPACES DE STATIONNEMENT

(30) Priorität: 30.10.2013 DE 102013222071
(43) Veröffentlichungstag der Anmeldung: 07.09.2016
(73) Patentinhaber: Robert Bosch GmbH, 70442 Stuttgart (DE)
(72) Erfinder: MIELENZ, Holger, 73760 Ostfildern (DE)
(86) Internationale Anmeldenummer: PCT/EP2014/068514
(87) Internationale Veröffentlichungsnummer: WO 2015/062769

(56) Entgegenhaltungen:
- DE-A1-102005 029 336
- DE-A1-102008 027 692
- US-A1- 2010 156 672
- US-A1- 2012 188 100

## Beschreibung

### Stand der Technik

Valet Parking Systeme sind Fahrerassistenzsysteme für Parkplatzanlagen, die es zumeist über die Kommunikation mit einem Parkraumverwaltungssystem, das beispielsweise als Server ausgebildet ist, ermöglichen, ein Fahrzeug ohne die Einwirkung eines Fahrers von einem Einfahrbereich einer Parkplatzanlage zu einem freien Parkplatz zu fahren, um das Fahrzeug dort für eine bestimmte Zeit abzustellen. Das Parkraumverwaltungssystem übernimmt dabei die Verwaltung der zur Verfügung stehenden Parkplätze, es weist die Parkplätze den jeweiligen Fahrzeugen zu und verwaltet Parkdauer und gegebenenfalls Abrechnung der Parkkosten. Auf Anfrage des Fahrers bzw. des Fahrzeugbesitzers wird das Fahrzeug in einen Abholbereich zurückgebracht. Der Fahrer wird dadurch von der Parkplatzsuche und dem Ein- und Ausparkvorgang entlastet.

Bei bisher bekannten Valet-Parking Systemen wird der Ein- und Ausparkvorgang von einem menschlichen Chauffeur der Parkplatzanlage durchgeführt.Die US 2012/0232965 A1, beschreibt ein derartiges computerimplementiertes System zum unterstützten Parken eines Fahrzeugs. Hierbei ist vorgesehen, dass ein Fahrer eines Fahrzeugs an einem Übergabeort sein Fahrzeug einem Chauffeur übergibt, der dieses anschließend parkt. Es ist offenbart, dass der Fahrer des Fahrzeugs über eine mobile Anwendung, beispielsweise über ein Smartphone, sein Fahrzeug anfordern kann. Dabei stehen ihm verschiedene Optionen zur Verfügung, insbesondere wo und wann er sein Fahrzeug in Empfang nehmen will.

Die US 2013/0102338 A1, beschreibt ein mobilfunkbasiertes System zum Valet Parking. Der Fahrer eines geparkten Fahrzeugs kann sein Fahrzeug anfordern, indem er einen speziellen Code per SMS an eine zentrale Nummer schickt. Anschließend stellt ein Chauffeur das Fahrzeug an einem vordefinierten Abholpunkt bereit. Hierbei ist vorgesehen, dass das Fahrzeug zuerst bereitgestellt wird, wobei anschließend dem Fahrer mitgeteilt wird, dass dieser sein Fahrzeug nun in Empfang nehmen kann. Das Fahrzeug muss daher am Abholort warten.

US 2012/188100 A1 offenbart ein Verfahren für einen Automatischen Park-Parkservice. Dazu gehört eine Server-Vorrichtung, welche einen Registrierung-Management-Service für den Empfang von Nutzerprofilinformationen umfasst. Basierend auf den Nutzerprofilinformationen, die beispielsweise Informationen über den Benutzer, das zu parkende Fahrzeug und ein mobiles Endgerät umfassen, werden geeignete Parklücken ausgewählt und auf einer Parkplatzkarte digital dargestellt. Eine Parkkartenmanagementeinheit empfängt Informationen über eine schließlich von vom Benutzer ausgewählten Parklücke über das mobile Endgerät und stellt einen Weg zum endgültigen Stellplatz zur Verfügung. Bezüglich eines Ausparkvorgangs wird erwähnt, dass ein Abholplatz mittels des mobilen Endgeräts ausgewählt werden kann.

US 2010/156672 A1 offenbart ein automatisches Valet-Parking System. Ein Zielparkplatz für ein Fahrzeug wird basierend auf dem aktuellen Belegungszustand der Parkplätze ausgewählt und eine Einparktrajektorie für das Fahrzeug wird berechnet. Parkbelegungssensoren überwachen den Belegungszustand der Parkplätze, weitere Sensoren dienen zum Führen des Fahrzeugs entlang der berechneten Einparktrajektorie. Zum Verlassen des Valet-Parking Areals, wird eine Ausparktrajektorie bereitgestellt. Dabei kann vorgesehen sein, dass basierend auf historischen Daten, Fahrzeuge die das Parkareal wahrscheinlich früher verlassen, näher an einer Abholzone abgestellt werden. Der Ausparkvorgang wird durch die entsprechende Anfrage des Benutzers gestartet.

DE 10 2008 027692 A1 beschreibt ein eine Verfahren zur Unterstützung eines Fahrers eines Fahrzeugs bei einem Parkvorgang, bei dem das Fahrzeug, nachdem es der Fahrer verlassen hat, selbstständig eine geeignete Abstellfläche sucht und dort einparkt und/oder, wenn der Fahrer das Fahrzeug benötigt, selbstständig von der Abstellfläche ausparkt und den Fahrer selbstständig an einer bestimmten Stelle abholt. Dazu werden Informationen verschiedenster Fahrerassistenzsysteme miteinander verknüpft. Dabei ist insbesondere vorgesehen, dass der Fahrer das Fahrzeug bei Bedarf "zu sich ruft".

DE 10 2005 029336 A1 beschreibt ein Verfahren zur selbsttätigen Steuerung eines Fahrzeugs. An definierten Orten kann vom Fahrzeugführer vorgegeben werden, dass die verbleibende Wegstrecke vom Ausgangspunkt zu einem Zielpunkt vom Fahrzeug selbstfahrend ohne Passagiere zurückgelegt werden soll. Das Fahrzeug tauscht während der autonomen Fahrt über eine Funkverbindung Daten mit anderen Fahrzeugen aus, wobei von dem Daten austauschenden Fahrzeug mittels Sensoren die Umgebung erkannt wird und wobei abhängig von den von anderen Fahrzeugen empfangenen Daten die Wegstrecke zum Zielpunkt und/oder der Zielpunkt selbst variiert wird. Eine Rückkehr des Fahrzeugs kann zu einem vorgegebenen Zeitpunkt an einem definierten Abholpunkt erfolgen.

### Offenbarung der Erfindung

Erfindungsgemäß wird vorgeschlagen, ein Parkraumverwaltungssystem für eine Valet-Parking Funktion zu verbessern, indem der Zeitpunkt des Einleitens des automatischen Ausparkvorgangs optimiert wird. Dazu wird abgeschätzt oder explizit vorgegeben, wann der Fahrer eines geparkten Fahrzeugs an einer vordefinierten Abholposition sein wird, so dass das erfindungsgemäße Parkraumverwaltungssystem dem abzuholenden Fahrzeug übermitteln kann, wann dieses den Ausparkvorgang zu starten hat, um rechtzeitig an der Abholposition zu sein. Das Parkraumverwaltungssystem weist dazu eine Recheneinheit auf, die einen optimierten Startzeitpunkt für das Einleiten des Ausparkvorgangs abhängig von einer vorgegebenen Abholzeit berechnet. Dabei können Ausparktrajektorien abhängig von der Position des zugewiesenen Parkplatzes und der Abholposition berücksichtigt werden. Damit kann die Zeitdauer berechnet werden, die das Fahrzeug für das Zurücklegen der Ausparktrajektorie von einem zugewiesenen Parkplatz zur Abholposition benötigt.

Das erfindungsgemäße Verfahren und Parkraumverwaltungssystem ermöglicht somit die Optimierung der Startzeit eines abgestellten Fahrzeugs zur Rückkehr an eine Abholposition. Dabei kann unter der Abholposition sowohl eine exakte Position oder auch eine Position innerhalb eines bestimmten Abholbereichs (des sogenannten drop-off Bereichs) verstanden werden. Damit wird durch die Erfindung eine Reduktion der Verweilzeiten der einzelnen Fahrzeuge im Abholbereich oder an der Abholposition erzielt. Außerdem wird erfindungsgemäß eine Minimierung von Konflikten mit weiteren Fahrzeugen erzielt.

Es wird ein Parkraumverwaltungssystem vorgeschlagen, dass Mittel zum Bereitstellen jeweils einer Kommunikationsverbindung zwischen dem Parkraumverwaltungssystem und einem Fahrzeug, sowie zwischen dem Parkraumverwaltungssystem und einem Mobilgerät aufweist. Das Parkraumverwaltungssystem weist außerdem eine Recheneinheit auf.

Das Parkraumverwaltungssystem ist dazu eingerichtet, den Belegungszustand eines vorgegebenen Parkraums zu überwachen und auf eine Einparkanfrage von einem Mobilgerät und/oder einem Fahrzeug eines Benutzers, diesem Benutzer einen Parkplatz zuzuweisen. Dem Mobilgerät und/oder dem Fahrzeug werden mittels der Kommunikationsverbindung Positionsdaten des zugewiesenen Parkplatzes übermittelt. Erfindungsgemäß ist das Parkraumverwaltungssystem eingerichtet, auf eine Abholanfrage von dem Mobilgerät mittels der Kommunikationsverbindung zu einem Startzeitpunkt einen Ausparkvorgang einzuleiten bei dem sich das Fahrzeug autonom zu einer vorgegebenen Abholposition bewegt. Dieser Startzeitpunkt wird erfindungsgemäß abhängig von einer vorgegebenen Abholzeit von dem Parkraumverwaltungssystem berechnet. Dabei kann die Abholzeit beispielsweise explizit von dem Benutzer, der sein Fahrzeug abholen möchte, vorgegeben werden und von dem Mobilgerät an das Parkraumverwaltungssystem übermittelt werden. Die Abholposition kann beispielsweise vom Parkraumverwaltungssystem fest vorgegeben werden, oder vom Benutzer aus einer Liste von möglichen Abholpositionen ausgewählt werden. Es ist ebenfalls denkbar, dass der Nutzer eine Abholposition innerhalb oder außerhalb des vorgegebenen Parkraums frei wählen kann. Das Parkraumverwaltungssystem weist erfindungsgemäß eine Recheneinheit auf, mittels der berechnet wird, wie lange das Fahrzeug voraussichtlich braucht, um von dem zugewiesenen Parkplatz auf dem das Fahrzeug abgestellt ist, zu der vorgegebenen Abholposition verbracht zu werden. Bei der Berechnung können beispielsweise die Entfernung des Parkplatzes zur Abholposition, die durchschnittliche Geschwindigkeit des Fahrzeugs beim Ausparkvorgang, sowie andere Fahrzeuge, die sich während des Ausparkvorgangs in dem Parkraum bewegen, einbezogen werden.

Aus dieser berechneten Dauer des Ausparkvorgangs kann das Parkraumverwaltungssystem erfindungsgemäß einen Startzeitpunkt für das Einleiten des Ausparkvorgangs ermittelt, der so optimiert ist, dass sowohl die Wartezeit des Benutzers auf sein Fahrzeug als auch die Verweildauer des Fahrzeugs an der Abholposition minimiert sind. Weiterhin kann so die Auslastung des Parkraums mit Fahrzeugen optimiert werden. Sollte beispielsweise der Parkraum voll belegt sein und ein weiterer Benutzer sein Fahrzeug abgeben wollen, könnte im Rahmen der Erfindung für das nächste abzuholende Fahrzeug eine längere Standzeit an der Abholposition toleriert werden, da somit ein weiterer Parkplatz frei werden kann. Das erfindungsgemäße Parkraumverwaltungssystem kann deshalb insbesondere eine Bewertung und Priorisierung aller rückgerufenen Fahrzeuge dahingehend vornehmen, wessen Fahrer als erster eintrifft, um das Startsignal an das betreffende Fahrzeug zur Einleitung des Ausparkvorgangs zu senden. Dann kann der freigewordene Parkplatz dem nächsten eintreffenden Fahrzeug angeboten werden. Ebenso kann mit weiteren Fahrzeugen verfahren werden, indem freie Verkehrswege genutzt werden, um die Fahrzeuge über eine gewisse Zeit vor der Abholung mobil zu halten, um damit eine höhere Auslastung der vorhandenen Parkplätze zu gewährleisten.

In einer bevorzugten Ausführung der Erfindung ist das Parkraumverwaltungssystem eingerichtet, eine Einparktrajektorie von einer vorgegebenen Abgabeposition zu dem zugewiesenen Parkplatz an das Fahrzeug zu übermitteln, so dass das Fahrzeug einen autonomen Einparkvorgang entlang der Einparktrajektorie in den Parkplatz ausführen kann. Dazu muss das Fahrzeug entsprechende Mittel aufweisen, die es in die Lage versetzen, autonom, also ohne Zutun eines menschlichen Fahrers, entlang einer vorgegebenen Trajektorie zu fahren. Derartige Fahrzeuge sind aus dem Stand der Technik bekannt. Die Quer- und Längsführung wird von einem Steuergerät an Bord des Fahrzeugs derart angesteuert, dass sich das Fahrzeug entlang der vorgegebenen Trajektorie bewegt.

Analog kann bei einer Abholanfrage eine Ausparktrajektorie von dem Parkraumverwaltungssystem an das Fahrzeug übermittelt werden, so dass das Fahrzeug einen autonomen Ausparkvorgang entlang der Ausparktrajektorie ausführen kann.

Die Einparktrajektorie und/oder die Ausparktrajektorie werden bevorzugt von dem Parkraumverwaltungssystem an das Fahrzeug übermittelt. Die Trajektorien können beispielsweise in Form von Lokalisierungsdaten vorliegen, bevorzugt zusammen mit Positions- und Orientierungsinformationen bezüglich eines zugrundegelegten Koordinatensystems, weiter bevorzugt zusammen mit ergänzenden Attributen zur Optimierung der Regelgüte, wie z.B. Krümmung, Geschwindigkeit, Beschleunigung, eingelegtem Gang und dergleichen.

Die Einparktrajektorie und/oder die Ausparktrajektorie können bevorzugt mittels der Recheneinheit des Parkraumverwaltungssystems berechnet werden. Bei der Berechnung können so bevorzugt einer oder mehrere der folgenden Parameter berücksichtigt werden: die aktuelle Fahrzeugposition, die Zielposition, der Fahrzeugtyp, die Positionen von Objekten im Fahrzeugumfeld und/oder aktuelle Umweltbedingungen, wie Fahrbahnzustand oder Wetter. Dadurch kann eine verbesserte Genauigkeit des autonomen Einpark- und/oder Ausparkvorgangs erzielt werden.

Alternativ ist es möglich, die Einparktrajektorie und/oder die Ausparktrajektorie aus einer dafür vorgesehenen Speichereinheit des Parkraumverwaltungssystems abzurufen. Dazu ist in der Speichereinheit bevorzugt eine Liste mit Trajektorien für die verschiedenen Kombinationen von Parkplätzen und Abgabepositionen und/oder Kombinationen von Parkplätzen und Abholpositionen gespeichert. Für die jeweils zutreffende Kombination wird die entsprechende Trajektorie aufgerufen und an das Fahrzeug übermittelt. Diese Variante zeichnet sich durch einen reduzierten Rechenaufwand aus.

Erfindungsgemäß ist das Parkraumverwaltungssystem eingerichtet die Abholzeit abhängig von einer aktuellen Position des Benutzers und/oder des wahrscheinlichsten Wegs des Benutzers zur Abholposition und/oder einer Durchschnittsgeschwindigkeit des Benutzers und/oder durch die Ankunftszeit eines von dem Benutzer befahrenen öffentlichen Verkehrsmittels vorzugeben. Dazu fragt das Parkraumverwaltungssystem Informationen über die Position des Benutzers zum Zeitpunkt der Abholanfrage von dem Mobilgerät, beispielsweise die aktuellen GPS-Koördinaten des Mobilgeräts oder den Fahrplan eines von dem Benutzer benutzten öffentlichen Verkehrsmittels, beispielsweise den Fahrplan einer Bahnverbindung oder einem Flugplan, von dem der Benutzer hinterlegt hat, dass er es benutzt. Dies ist insbesondere dann vorteilhaft, wenn das erfindungsgemäße Parkraumverwaltungssystem einen Parkraum verwaltet, der diesem öffentlichen Verkehrsmittel zugeordnet ist, beispielsweise ein Parkhaus eines Bahnhofs oder Flughafens. So ist es beispielsweise nicht nötig, dass der Benutzer aktiv eine Abholanfrage an das Parkraumverwaltungssystem sendet. Stattdessen kann die Abholanfrage automatisch erzeugt werden, wenn das Parkraumverwaltungssystem erkennt, dass die Ankunft des öffentlichen Verkehrsmittels unmittelbar bevorsteht. Dazu kann das Parkraumverwaltungssystem beispielsweise über eine Internetverbindung den Fahrplan aktualisieren. Ferner ist denkbar, dass das Parkraumverwaltungssystem neben Informationen zu öffentlichen Transportmitteln auch Informationen von Orten der Freizeitgestaltung, wie Kinos und dergleichen empfangen kann, die ebenso zu einer Ableitung der erwarteten Abholzeit nach dem zuvor genannt Schema verwendbar sind.

In einer bevorzugten Ausführung ist das Parkraumverwaltungssystem eingerichtet, bei einer Abholanfrage des Benutzers dem Benutzer mehrere verschiedene Auswahlmöglichkeiten für die Abholposition und/oder die Abholzeit anzubieten und über die Kommunikationsverbindung an das Mobilgerät zu übermitteln und die vom Benutzer getroffene Auswahl zu empfangen.

Die Erfindung betrifft außerdem ein Fahrzeug mit einer Valet-Parking-Funktion, insbesondere ein Kraftfahrzeug. Das erfindungsgemäß ausgebildete Fahrzeug umfasst Kommunikationsmittel zum Senden und Empfangen von Daten an und von einem erfindungsgemäß ausgebildeten Parkraumverwaltungssystem. Das Fahrzeug umfasst ein System zum autonomen Parken und ist eingerichtet, nach Erreichen einer vorgegebenen Abgabeposition autonom entlang einer, insbesondere von dem Parkraumverwaltungssystem übermittelten, Einparktrajektorie in einen von dem Parkraumverwaltungssystem zugewiesenen Parkplatz zu fahren, und dass das Fahrzeug weiterhin eingerichtet ist, nach dem Empfangen eines Startsignals von dem Parkraumverwaltungssystem autonom entlang einer, insbesondere von dem Parkraumverwaltungssystem übermittelten, Ausparktrajektorie aus dem Parkplatz zu einer vorgegeben Abholposition zu fahren, wobei eine vorgegebene Abholzeit berücksichtigt wird.

Bevorzugt weist das Fahrzeug ein Umfelderfassungssystem mit Umfeldsensoren auf, die insbesondere als Ultraschallsensoren und/oder Radarsensoren und/oder eine oder mehrere Kameras, ausgebildet sind. Damit kann das Fahrzeug während der Durchführung des autonomen Einpark- und/oder Ausparkvorgangs seine Umgebung überwachen und Hindernisse erkennen, so dass Kollisionen vermieden werden.

Die Erfindung sieht außerdem ein Verfahren zur Einparkunterstützung eines Fahrers eines erfindungsgemäßen Fahrzeugs vor, das die folgenden Verfahrensschritte umfasst:
- Aufbau einer Kommunikationsverbindung zwischen einem Mobilgerät und/oder dem Fahrzeug und einem Parkraumverwaltungssystem , das wie oben beschrieben ausgebildet ist,
- Senden einer Einparkanfrage von dem Fahrzeug und/oder von dem Mobilgerät an das Parkraumverwaltungssystem,
- Zuweisen eines Parkplatzes durch das Parkraumverwaltungssystem ,
- Verbringen des Fahrzeugs in den zugewiesenen Parkplatz,
- gekennzeichnet durch die Schritte
- Senden einer Abholanfrage von dem Mobilgerät an das Parkraumverwaltungssystem, wobei eine Abholposition und eine Abholzeit vorgegeben werden,
- Verbringen des Fahrzeugs von dem Parkplatz zu der vorgegebenen Abholposition unter Berücksichtigung der vorgegebenen Abholzeit.

Bevorzugt ist vorgesehen, dass eine Einparktrajektorie und/oder eine Ausparktrajektorie von dem Parkraumverwaltungssystem bestimmt und an das Fahrzeug übermittelt wird, wobei das Fahrzeug autonom entlang der Einparktrajektorie von einer Abgabeposition zu dem Parkplatz fährt und/oder wobei das Fahrzeug autonom entlang der Ausparktrajektorie von dem Parkplatz zu der vorgegebenen Abholposition fährt. Besonders bevorzugt wird die Einparktrajektorie und/oder die Ausparktrajektorie von einer Recheneinheit des Parkraumverwaltungssystems berechnet oder von einer Speichereinheit des Parkraumverwaltungssystems abgerufen.

Der Vorteil eines derartigen Verfahrens liegt darin, dass im Gegensatz zu bekannten automatischen Parkieranlagen mit Fördersystemen bestehende Anlagen nicht weiter nachgerüstet werden müssen, um dem Fahrer den gesteigerten Komfort zu ermöglichen, ihn von der Parkplatzsuche zu befreien.

Kurze Beschreibung der Zeichnungen
Figur 1 zeigt einen Abgabevorgang gemäß eines Ausführungsbeispiels der Erfindung.
Figur 2 zeigt einen Abholvorgang gemäß eines Ausführungsbeispiels der Erfindung.
Figur 3 zeigt ein Flussdiagramm eines erfindungsgemäßen Verfahrens.

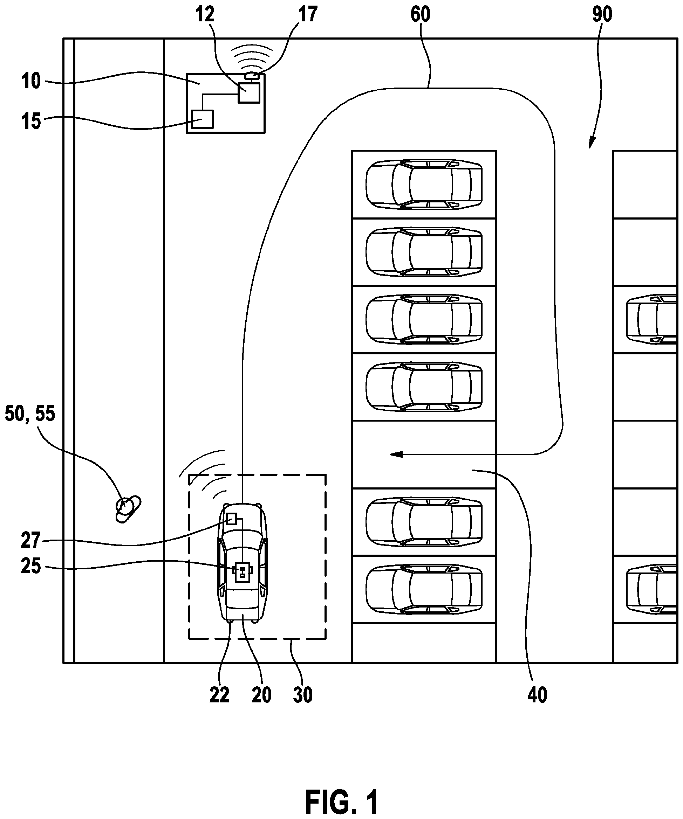

In Figur 1 ist der Abgabevorgang gemäß der Erfindung dargestellt. Ein Parkraum 90 wird von einem erfindungsgemäß ausgebildeten Parkraumverwaltungssystem 10 verwaltet und überwacht. Das Parkraumverwaltungssystem 10 ist beispielsweise als Server ausgebildet und weist eine Recheneinheit 12, eine Speichereinheit 15 und ein Kommunikationsmodul 17 auf. Das Kommunikationsmodul 17 dient dazu, eine drahtlose Datenverbindung zwischen dem Parkraumverwaltungssystem 10 und einem Benutzer aufzubauen. Dabei können bekannte Techniken der drahtlosen Kommunikation eingesetzt werden, beispielsweise WLAN, GMS, LTE oder BlueTooth. Der Fahrer 50 in dem gezeigten Beispiel hat sein erfindungsgemäß ausgestaltetes Fahrzeug 20 in einem vorgegebenen Abgabebereich bzw. einer vorgegebenen Abgabeposition 30 des Parkraums 90 abgestellt. Das Fahrzeug 20 weist ein System zum autonomen Parken 25 auf, ist also eingerichtet, ohne Zutun eines Fahrers eine vorgegebene Trajektorie abzufahren. Dazu weist das Fahrzeug 20 in bekannter Weise entsprechende Mittel zur Ansteuerung des Antriebs, der Lenkung und des Bremssystems auf, sowie Sensoren, über die beispielsweise über den Lenkwinkel und die Drehung der Räder die aktuelle Position des Fahrzeugs 20 relativ zur Abgabeposition 30 bestimmbar sind. Weiterhin weist das Fahrzeug 20 erfindungsgemäß ein Kommunikationsmodul 27 auf, mittels dem eine drahtlose Datenverbindung zwischen dem Parkraumverwaltungssystem 10 und dem Fahrzeug 20 aufgebaut werden kann.

Entweder direkt vom Fahrzeug 20 oder von einem Mobilgerät 55, beispielsweise einem Smartphone oder einem Tablet-Computer, das der Fahrer 50 bei sich trägt wird vom Fahrer 50 über die drahtlose Kommunikationsverbindung eine Einparkanfrage an das Parkraumverwaltungssystem 10 gesendet. Das Parkraumverwaltungssystem 10 prüft, ob freie Parkplätze in dem Parkraum 90 vorhanden sind. Falls mindestens ein freier Parkplatz verfügbar ist, weist das Parkraumverwaltungssystem 10 dem Fahrzeug 20 einen Parkplatz 40 zu. Mittels der Recheneinheit 12 berechnet das Parkraumverwaltungssystem 10 eine Einparktrajektorie 60. Alternativ kann das Parkraumverwaltungssystem 10 auch eine in der Speichereinheit 15 abgelegte Einparktrajektorie für den Parkplatz 40 aufrufen. Die Einparktrajektorie 60 wird über die Kommunikationsverbindung von dem Parkraumverwaltungssystem 10 an das Fahrzeug 20 übertragen. Das Fahrzeug 20 kann nun autonom entlang der Einparktrajektorie 60 in den zugewiesenen Parkplatz 40 einparken.

Bevorzugt weist das Fahrzeug 20 einen oder mehrere Umfeldsensoren 22 auf, die das Umfeld des Fahrzeugs 20 während eines autonomen Fahrmanövers überwachen und Hindernisse erkennen, so dass Kollisionen des Fahrzeugs 20 mit Objekten im Fahrzeugumfeld während des autonomen Fahrmanövers vermieden werden können. Dazu wird das autonome Fahrmanöver entlang der Trajektorie 60 beispielsweise unterbrochen, wenn durch die Umfeldsensoren 22 ein Objekt erfasst wird, mit dem das Fahrzeug 20 bei Fortsetzung des autonomen Fahrmanövers kollidieren würde. Alternativ kann auch abhängig von den durch die Umfeldsensoren 22 erfassten Umgebungsinformationen eine Anpassung der Trajektorie 60 erfolgen, die eine Kollision vermeidet. Die Umfeldsensoren 22 sind beispielsweise als Ultraschallsensoren, Radarsensoren oder optische Sensoren wie .z.B. Video-, PMD- oder Lasersysteme, ausgebildet.

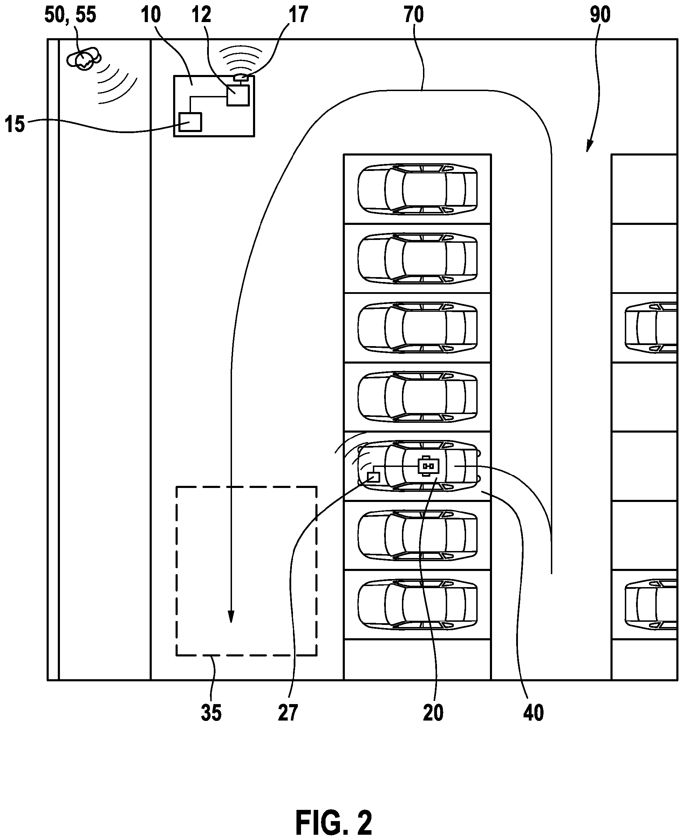

Figur 2 stellt den Abholvorgang gemäß der Erfindung dar. Der Fahrer 50, der sich noch in einiger Entfernung zu dem Parkraum 90 befindet, baut über sein Mobilgerät 55 eine drahtlose Kommunikationsverbindung zu dem Parkraumverwaltungssystem 10 auf und sendet eine Abholanfrage. Dabei kann er entweder eine gewünschte Abholzeit für sein Fahrzeug 20 direkt vorgeben, oder von dem Parkraumverwaltungssystem 10 einen Vorschlag anfordern. Dazu ist das Parkraumverwaltungssystem 10 bevorzugt eingerichtet, Positionsdaten von dem Mobilgerät 55 abzufragen und basierend z.B. auf einer berechneten Entfernung des Mobilgeräts 55 zu einer vom Fahrer 50 gewählten oder vorgegebenen Abholposition 35 und einer Geschwindigkeit des Fahrers 50, eine Abholzeit zu berechnen und als Vorschlag an das Mobilgerät 55 zu übermitteln. Der Fahrer 50 kann die so berechnete Abholzeit übernehmen oder modifizieren. Die Ermittlung der Abholzeit kann ferner nicht nur über die reine Distanz (Entfernung Luftlinie) erfolgen, sondern auch die von der aktuellen Position des Fahrers 50 zur Abholposition 35 des Fahrzeuges 20 vorhandene Fußgängerwege berücksichtigen. In einer möglichen Ausprägung verwendet das Verfahren die kürzeste Distanz, die erfasst wird. Ferner kann beispielsweise auch derjenige Weg berücksichtigt werden, der über die öffentliche Beschilderung ausgeschrieben ist.

Mittels der Kommunikationsverbindung wird die vom Fahrer gewählte Abholzeit an das Parkraumverwaltungssystem 10 übermittelt und als vorgegebene Abholzeit in der Speichereinheit 15 abgelegt. Weiterhin kann das Mobilgerät 55 während der Annäherung des Fahrers 50 an die Abholposition 35 fortlaufend prüfen, ob der Fahrer 50 die vorgeplante Wegstrecke wählt und gegebenenfalls eine Aktualisierung der Abholzeit an das Parkraumverwaltungssystem 10 übermitteln. Sollte das Fahrzeug 20 zu diesem Zeitpunkt bereits losgefahren sein (z.B. wenn der Fahrer wieder umdreht weil er im Flughafen etwas vergessen hat), wird situationsgemäß ein freier Parkplatz angefahren, der vom Parkraumverwaltungssystem 10 zugewiesen wurde.

Das Parkraumverwaltungssystem 10 berechnet nun eine Ausparktrajektorie 70 von dem zugewiesenen Parkplatz 40 zu der Abholposition 35 für das Fahrzeug 20 des Fahrers 50 oder ruft eine in der Speichereinheit 15 abgelegte, dem Parkplatz 40 und die Abholposition 35 zugeordnete Ausparktrajektorie 70 ab. Das Parkraumverwaltungssystem 10 baut eine Kommunikationsverbindung zu dem Fahrzeug 20 auf und übermittelt die Ausparktrajektorie 70 an das System zum autonomen Parken 25 des Fahrzeugs 20. Das Parkraumverwaltungssystem 10 berechnet außerdem erfindungsgemäß einen optimierten Startzeitpunkt für das Ausparkmanöver des Fahrzeugs 20 entlang der Ausparktrajektorie 70. Dabei wird erfindungsgemäß die vom Fahrer 50 vorgegebene Abholzeit berücksichtigt, so dass das Fahrzeug 20 möglichst genau zur vorgegebenen Abholzeit an der Abholposition 35 eintrifft. Somit wird sowohl die Wartezeit des Fahrers 50 auf sein Fahrzeug minimiert, als auch die Dauer, in der das Fahrzeug 20 die Abholposition 35 belegt. Zum Startzeitpunkt sendet das Parkraumverwaltungssystem 10 ein Signal an das System zum autonomen Parken 25 des Fahrzeugs 20, das den autonomen Ausparkvorgang einleitet. Der Fahrer 50 kann sein Fahrzeug zur vorgegebenen Abholzeit an der Abholposition 35 in Empfang nehmen. Bei der Berechnung des optimierten Startzeitpunkts zur Einleitung des Ausparkvorgangs wird die Ausparktrajektorie 70 und die berechnete Dauer, die das Fahrzeug 20 benötigt, um die Ausparktrajektorie 70 zurückzulegen, berücksichtigt. Weiterhin können weitere sich eventuell im Parkraum 90 bewegende Fahrzeuge berücksichtigt werden. So ist zum Beispiel denkbar, dass das Fahrzeug 20 eine bestimmte Zeit den Ausparkvorgang unterbrechen muss, um darauf zu warten, dass ein anderes Fahrzeug, das seinen Ein- oder Ausparkvorgang bereits begonnen hat, aus dem Weg gefahren ist oder die Abholposition 35 freigemacht hat. Da das Parkraumverwaltungssystem 10 alle Ein- und Ausparkvorgänge im Parkraum 90 verwaltet und steuert, kann es abhängig von den vorgegebenen Abholzeiten und Abholpositionen die jeweiligen Ausparkvorgänge optimieren. Optional können weitere Parameter, wie z.B. die aktuelle Wettersituation, in die Berechnung der Trajektorien 60 und 70 sowie der Berechnung des optimierten Startzeitpunkts zur Einleitung des Ausparkvorgangs einbezogen werden. Auch kann das Fahrzeug 20, wenn aufgrund einer Umfelderfassung durch die Umfeldsensoren 22 eine Unterbrechung oder Änderung der Einparktrajektorie 60 oder der Ausparktrajektorie 70 nötig wird, eine entsprechende Information an das Parkraumverwaltungssystem 10 übermitteln, wodurch das Parkraumverwaltungssystem 10 in die Lage versetzt wird, Parameter wie den optimierten Startzeitpunkt zur Einleitung eines Ausparkvorgangs entsprechend anzupassen. Bei größeren zeitlichen Verzögerungen von beispielsweise mehreren Minuten kann das Parkraumverwaltungssystem 10 eine entsprechende Nachricht an das Mobilgerät 55 übermitteln um den Fahrer 50 zu informieren.

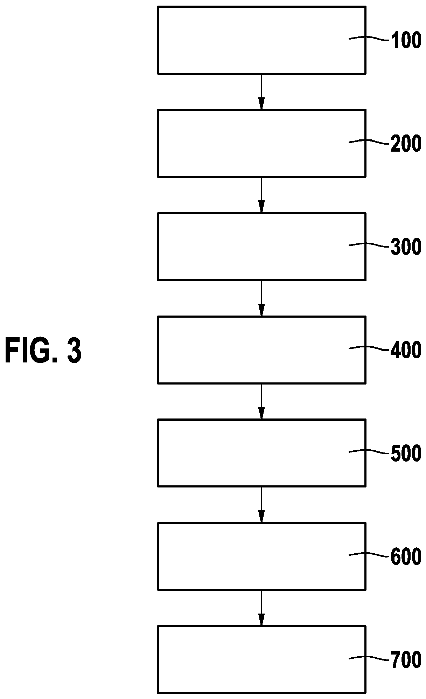

Figur 3 stellt ein Ausführungsbeispiel eines erfindungsgemäßen Verfahrens dar. In Schritt 100 wird eine Kommunikationsverbindung zwischen einem Mobilgerät und einem Parkraumverwaltungssystem, das gemäß dem in Zusammenhang mit den Figuren 1 und 2 beschriebenen Parkraumverwaltungssystem 10 zur Überwachung eines bestimmten Parkraums ausgebildet ist, aufgebaut. In Schritt 200 wird eine Einparkanfrage von dem Mobilgerät an das Parkraumverwaltungssystem gesendet. Dazu muss sich das Mobilgerät bei dem Parkraumverwaltungssystem eindeutig identifizieren. In Schritt 300 wird dem Benutzer des Mobilgeräts ein bestimmter Parkplatz durch das Parkraumverwaltungssystem zugewiesen. Dabei werden die Position und/oder die Koordinaten und/oder die Kennung des Parkplatzes übermittelt. Das Parkraumverwaltungssystem speichert die Zuweisung. In Schritt 400 wird das
Fahrzeug des Benutzers in den zugewiesenen Parkplatz verbracht. Schritt 400 wird eingeleitet, wenn der Benutzer sein Fahrzeug zu einer vorgegebenen Abgabeposition gebracht hat und dem Parkraumverwaltungssystem beispielsweise eine Bestätigung sendet, dass das Fahrzeug abgegeben wurde.

Das Fahrzeug fährt autonom zu dem zugewiesenen Parkplatz, wobei es eine Einparktrajektorie befährt, die ihm zuvor von dem Parkraumverwaltungssystem übermittelt wurde.

Erfindungsgemäß sendet der Benutzer in Schritt 500 von seinem Mobilgerät eine Abholanfrage an das Parkraumverwaltungssystem, sobald er weiß, dass er sein Fahrzeug demnächst abholen möchte. Die Abholanfrage kann auch automatisch von dem Mobilgerät an das Parkraumverwaltungssystem gesendet werden, wenn zum Beispiel bestimmte Bedingungen erfüllt sind. Denkbar wäre zum Beispiel, dass die Abholanfrage zu einer bestimmten Uhrzeit oder einem bestimmten Ereignis gesendet wird, oder wenn der Benutzer einen bestimmten Bereich verlässt oder betritt. Es ist auch möglich, dass die Abholanfrage in dem Parkraumverwaltungssystem selbst erzeugt wird, wenn zum Beispiel von dem Benutzer eine Flug- oder Bahnverbindung hinterlegt wurde und die Ankunft bevorsteht. Das Parkraumverwaltungssystem kann die aktuelle Ankunftszeit beispielsweise im Internet abrufen. Außerdem werden in Schritt 500 eine Abholposition und eine Abholzeit für das Fahrzeug vorgegeben. Die Abholposition und die Abholzeit können explizit vom Benutzer vorgegeben und über das Mobilgerät an das Parkraumverwaltungssystem übermittelt werden oder abhängig von Bedingungen von dem Parkraumverwaltungssystem berechnet werden. Bei vielen Parkräumen mit Valet-Parking steht nur ein bestimmter Abholbereich zur Verfügung, so dass die Vorgabe der Abholposition durch den Benutzer entfällt. Es können auch wenige verschiedene Abholpositionen zur Verfügung stehen unter denen der Benutzer auswählen muss. Die Abholzeit kann vom Benutzer frei gewählt werden. Alternativ kann das Parkraumverwaltungssystem Vorschläge für plausible Abholzeiten basierend auf der aktuellen GPS-Position des Fahrers und einer berechneten Dauer für den Ausparkvorgang des Fahrzeugs berechnen und dem Fahrer zur Auswahl anbieten.

In Schritt 600 erfolgt die Übertragung einer von dem Parkraumverwaltungssystem bestimmten Ausparktrajektorie an das Fahrzeug. Die Ausparktrajektorie kann entweder von einer Recheneinheit des Parkraumverwaltungssystems berechnet werden oder von einer Speichereinheit des Parkraumverwaltungssystems abgerufen werden.

In Schritt 700 sendet das Parkraumverwaltungssystem ein Startsignal zur Einleitung des Ausparkvorgangs. Der Zeitpunkt des Startsignals wird von dem Parkraumverwaltungssystem derart berechnet, dass die vorgegebene Abholzeit berücksichtigt wird. Das Fahrzeug beginnt zum Zeitpunkt des Startsignals mit einem autonomen Ausparkvorgang entlang der übermittelten Ausparktrajektorie von dem Parkplatz zu der vorgegebenen Abholposition wo der Benutzer sein Fahrzeug in Empfang nehmen kann. Durch die optimierte Berechnung des Startzeitpunkts werden Wartezeiten des Fahrers vermieden und Standzeiten sowie die Auslastung des Parkraums können abhängig von den gegebenen Umständen ebenfalls optimiert werden.

## Patentansprüche

1. Parkraumverwaltungssystem (10) umfassend
- eine Recheneinheit (12),
- Mittel (17) zum Bereitstellen jeweils einer Kommunikationsverbindung zwischen dem Parkraumverwaltungssystem (10) und einem Fahrzeug (20) und dem Parkraumverwaltungssystem (10) und einem Mobilgerät (55),
wobei das Parkraumverwaltungssystem (10) eingerichtet ist, den Belegungszustand eines vorgegebenen Parkraums (90) zu überwachen und auf eine Einparkanfrage von einem Mobilgerät (55) und/oder einem Fahrzeug (20) eines Benutzers (50) diesem Benutzer (50) einen Parkplatz (40) zuzuweisen und dem Mobilgerät (55) und/oder dem Fahrzeug (20) mittels der Kommunikationsverbindung Positionsdaten des zugewiesenen Parkplatzes (40) zu übermitteln,
**dadurch gekennzeichnet, dass**
das Parkraumverwaltungssystem (10) eingerichtet ist, auf eine Abholanfrage von dem Mobilgerät (55) mittels der Kommunikationsverbindung zu einem Startzeitpunkt einen Ausparkvorgang einzuleiten bei dem sich das Fahrzeug (20) autonom zu einer vorgegebenen Abholposition (35) bewegt, wobei der Startzeitpunkt abhängig von einer vorgegebenen Abholzeit durch die Recheneinheit (12) berechenbar ist, wobei die Abholzeit abhängig von einer aktuellen Position des Benutzers (50) und/oder des wahrscheinlichsten Wegs des Benutzers (50) zur Abholposition (35) und/oder einer Durchschnittsgeschwindigkeit des Benutzers (50) und/oder durch die Ankunftszeit eines von dem Benutzer (50) befahrenen öffentlichen Verkehrsmittels vorgegeben wird.

2. Parkraumverwaltungssystem (10) nach Anspruch 1, **dadurch gekennzeichnet, dass**
das Parkraumverwaltungssystem (10) eingerichtet ist,
- eine Einparktrajektorie (60) von einer vorgegebenen Abgabeposition (30) zu dem zugewiesenen Parkplatz (40) an das Fahrzeug (20) zu übermitteln, so dass das Fahrzeug (20) einen autonomen Einparkvorgang entlang der Einparktrajektorie (60) in den Parkplatz (40) ausführen kann,
- bei einer Abholanfrage eine Ausparktrajektorie (70) an das Fahrzeug (20) zu übermitteln, so dass das Fahrzeug (20) einen autonomen Ausparkvorgang entlang der Ausparktrajektorie (70) ausführen kann.

3. Parkraumverwaltungssystem (10) nach Anspruch 2, **dadurch gekennzeichnet, dass**
das Parkraumverwaltungssystem (10) eine Speichereinheit (15) aufweist, wobei die Einparktrajektorie (60) und/oder die Ausparktrajektorie (70) mittels der Recheneinheit (12) berechnet wird oder aus der Speichereinheit (15) abgerufen wird.

4. Parkraumverwaltungssystem (10) nach einem der Ansprüche 2 oder 3, **dadurch gekennzeichnet, dass** bei der Berechnung der Einparktrajektorie (60) und/oder der Ausparktrajektorie (70) mindestens einer der folgenden Parameter berücksichtigt wird: Fahrzeugtyp, Wettersituation, die Positionen von Objekten im Fahrzeugumfeld.

5. Parkraumverwaltungssystem (10) nach einem der Ansprüche 1 bis 4, **dadurch gekennzeichnet, dass** das Parkraumverwaltungssystem (10) eingerichtet ist, bei einer Abholanfrage mehrere Auswahlmöglichkeiten für die Abholposition (35) und/oder die Abholzeit anzubieten und über die Kommunikationsverbindung an das Mobilgerät (55) zu übermitteln.

6. Fahrzeug (20) mit Valet-Parking-Funktion umfassend Kommunikationsmittel (27) zum Senden und Empfangen von Daten an und von einem Parkraumverwaltungssystem (10) nach einem der Ansprüche 1 bis 5, **dadurch gekennzeichnet, dass** das Fahrzeug (20) ein System zum autonomen Parken (25) aufweist und eingerichtet ist, nach Erreichen einer vorgegebenen Abgabeposition (30) autonom entlang einer, insbesondere von dem Parkraumverwaltungssystem (10) übermittelten, Einparktrajektorie (60) in einen von dem Parkraumverwaltungssystem (10) zugewiesenen Parkplatz (40) zu fahren, und dass das Fahrzeug eingerichtet ist, nach dem Empfangen eines Startsignals von dem Parkraumverwaltungssystem (10) autonom entlang einer, insbesondere von dem Parkraumverwaltungssystem (10) übermittelten, Ausparktrajektorie (70) aus dem Parkplatz (40) zu einer vorgegeben Abholposition (35) zu fahren, wobei eine vorgegebene Abholzeit berücksichtigt wird.

7. Fahrzeug (20) nach Anspruch 6, **dadurch gekennzeichnet, dass** das Fahrzeug ein Umfelderfassungssystem mit Umfeldsensoren (22), insbesondere Ultraschallsensoren und/oder Radarsensoren und/oder eine oder mehrere Kameras, aufweist.

8. Verfahren zur Einparkunterstützung eines Fahrers (50) eines Fahrzeugs (20) nach einem der Ansprüche 6 oder 7, umfassend folgende Schritte
- Aufbau einer Kommunikationsverbindung zwischen einem Mobilgerät (55) und/oder dem Fahrzeug (20) und einem Parkraumverwaltungssystem (10), das nach einem der Ansprüche 1 bis 4 ausgebildet ist,
- Senden einer Einparkanfrage von dem Fahrzeug (20) und/oder von dem Mobilgerät (55) an das Parkraumverwaltungssystem (10),
- Zuweisen eines Parkplatzes (40) durch das Parkraumverwaltungssystem (10),
- Verbringen des Fahrzeugs (20) in den zugewiesenen Parkplatz (40),
**gekennzeichnet durch** die Schritte
- Senden einer Abholanfrage von dem Mobilgerät (55) an das Parkraumverwaltungssystem (10), wobei eine Abholposition (35) und eine Abholzeit vorgegeben werden,
- Verbringen des Fahrzeugs (20) von dem Parkplatz (40) zu der vorgegebenen Abholposition (35) unter Berücksichtigung der vorgegebenen Abholzeit.

9. Verfahren nach Anspruch 8, wobei eine Einparktrajektorie (60) und/oder eine Ausparktrajektorie (70) von dem Parkraumverwaltungssystem (10) bestimmt und an das Fahrzeug (20) übermittelt wird, wobei das Fahrzeug (20) autonom entlang der Einparktrajektorie (60) von einer Abgabeposition (30) zu dem Parkplatz (40) fährt und/oder wobei das Fahrzeug autonom entlang der Ausparktrajektorie (70) von dem Parkplatz (40) zu der vorgegebenen Abholposition (35) fährt.

10. Verfahren nach Anspruch 8, **dadurch gekennzeichnet, dass** die Einparktrajektorie (60) und/oder die Ausparktrajektorie (70) von einer Recheneinheit (12) des Parkraumverwaltungssystems (10) berechnet wird.

11. Verfahren nach Anspruch 8, **dadurch gekennzeichnet, dass** die Einparktrajektorie (60) und/oder die Ausparktrajektorie (70) von einer Speichereinheit (12) des Parkraumverwaltungssystems (10) abgerufen wird.

## Claims

1. Parking area management system (10) comprising
- a computing unit (12),
- means (17) for providing a respective communication connection between the parking area management system (10) and a vehicle (20) and between the parking area management system (10) and a mobile device (55),
the parking area management system (10) being set up to monitor the occupancy state of a predefined parking area (90) and, in response to a parking request from a mobile device (55) and/or a vehicle (20) belonging to a user (50), to allocate a parking space (40) to this user (50) and to transmit position data relating to the allocated parking space (40) to the mobile device (55) and/or to the vehicle (20) by means of the communication connection,
**characterized in that**
the parking area management system (10) is set up, in response to a collection request from the mobile device (55), by means of the communication connection, to initiate a parking-space-leaving operation at a starting time, during which the vehicle (20) autonomously moves to a predefined collection position (35), the starting time being able to be calculated by the computing unit (12) on the basis of a predefined collection time, the collection time being predefined on the basis of a current position of the user (50) and/or the most likely path of the user (50) to the collection position (35) and/or an average speed of the user (50) and/or the arrival time of a public means of transport used by the user (50).

2. Parking area management system (10) according to Claim 1, **characterized in that** the parking area management system (10) is set up
- to transmit a parking trajectory (60) from a predefined delivery position (30) to the allocated parking space (40) to the vehicle (20), with the result that the vehicle (20) can carry out an autonomous parking operation into the parking space (40) along the parking trajectory (60),
- to transmit a parking-space-leaving trajectory (70) to the vehicle (20) in the event of a collection request, with the result that the vehicle (20) can carry out an autonomous parking-space-leaving operation along the parking-space-leaving trajectory (70).

3. Parking area management system (10) according to Claim 2, **characterized in that** the parking area management system (10) has a storage unit (15), the parking trajectory (60) and/or the parking-space-leaving trajectory (70) being calculated by means of the computing unit (12) or being retrieved from the storage unit (15).

4. Parking area management system (10) according to either of Claims 2 and 3, **characterized in that** at least one of the following parameters is taken into account when calculating the parking trajectory (60) and/or the parking-space-leaving trajectory (70): vehicle type, weather situation, the positions of objects in the vehicle environment.

5. Parking area management system (10) according to one of Claims 1 to 4, **characterized in that** the parking area management system (10) is set up to provide a plurality of selection possibilities for the collection position (35) and/or the collection time in the event of a collection request and to transmit said possibilities to the mobile device (55) via the communication connection.

6. Vehicle (20) having a valet parking function, comprising communication means (27) for transmitting data to, and receiving data from, a parking area management system (10) according to one of Claims 1 to 5, **characterized in that** the vehicle (20) has an autonomous parking system (25) and is set up, after reaching a predefined delivery position (30), to drive autonomously along a parking trajectory (60), in particular a parking trajectory transmitted by the parking area management system (10), into a parking space (40) allocated by the parking area management system (10), and **in that** the vehicle is set up, after receiving a starting signal from the parking area management system (10) to drive autonomously along a parking-space-leaving trajectory (70), in particular a parking-space-leaving trajectory transmitted by the parking area management system (10), from the parking space (40) to a predefined collection position (35), a predefined collection time being taken into account.

7. Vehicle (20) according to Claim 6, **characterized in that** the vehicle has an environmental detection system having environmental sensors (22), in particular ultrasonic sensors and/or radar sensors and/or one or more cameras.

8. Method for assisting a driver (50) of a vehicle (20) according to either of Claims 6 and 7 with parking, comprising the following steps
- a communication connection is set up between a mobile device (55) and/or the vehicle (20) and a parking area management system (10) designed according to one of Claims 1 to 4,
- a parking request is transmitted from the vehicle (20) and/or from the mobile device (55) to the parking area management system (10),
- the parking area management system (10) allocates a parking space (40),
- the vehicle (20) is moved into the allocated parking space (40),
**characterized by** the following steps
- a collection request is transmitted from the mobile device (55) to the parking area management system (10), a collection position (35) and a collection time being predefined,
- the vehicle (20) is moved from the parking space (40) to the predefined collection position (35) taking into account the predefined collection time.

9. Method according to Claim 8, a parking trajectory (60) and/or a parking-space-leaving trajectory (70) being determined by the parking area management system (10) and being transmitted to the vehicle (20), the vehicle (20) driving autonomously along the parking trajectory (60) from a delivery position (30) to the parking space (40), and/or the vehicle driving autonomously along the parking-space-leaving trajectory (70) from the parking space (40) to the predefined collection position (35).

10. Method according to Claim 8, **characterized in that** the parking trajectory (60) and/or the parking-space-leaving trajectory (70) is/are calculated by a computing unit (12) of the parking area management system (10).

11. Method according to Claim 8, **characterized in that** the parking trajectory (60) and/or the parking-space-leaving trajectory (70) is/are retrieved from a storage unit (12) of the parking area management system (10).

## Revendications

1. Système de gestion d'espaces de stationnement (10), comprenant :
- une unité de calcul (12),
- des moyens (17) destinés à établir respectivement une liaison de communication entre un système de gestion d'espaces de stationnement (10) et un véhicule (20) et entre le système de gestion d'espaces de stationnement (10) et un appareil mobile (55),
dans lequel le système de gestion d'espaces de stationnement (10) est conçu pour surveiller l'état d'occupation d'un espace de stationnement (90) prédéterminé et, lors d'une demande de stationnement provenant d'un appareil mobile (55) et/ou d'un véhicule (20) d'un utilisateur (50), pour attribuer audit utilisateur (50) un emplacement de stationnement (40) et pour transmettre à l'appareil mobile (55) et/ou au véhicule (20) des données de position de l'emplacement de stationnement (40) attribué au moyen de la liaison de communication,
**caractérisé en ce que**
le système de gestion d'espaces de stationnement (10) est conçu pour lancer un processus de sortie de stationnement à un instant de début lors d'une demande de récupération provenant de l'appareil mobile (55) au moyen de la liaison de communication, processus lors duquel le véhicule (20) se déplace de manière autonome vers une position de récupération (35) prédéterminée, dans lequel l'instant de début peut être calculé par l'unité de calcul (12) en fonction d'un temps de récupération prédéterminé, dans lequel le temps de récupération est prédéterminé en fonction d'une position actuelle de l'utilisateur (50) et/ou du trajet le plus probable de l'utilisateur (50) vers la position de récupération (35) et/ou d'une vitesse moyenne de l'utilisateur (50) et/ou de l'heure d'arrivée d'un moyen de transport public utilisé par l'utilisateur (50).

2. Système de gestion d'espaces de stationnement (10) selon la revendication 1, **caractérisé en ce que** le système de gestion d'espaces de stationnement (10) est conçu pour
- pour transmettre au véhicule (20) une trajectoire de stationnement (60) depuis une position de dépôt (30) prédéterminée jusqu'à l'emplacement de stationnement (40) attribué, de manière à ce que le véhicule (20) puisse effectuer un processus de stationnement autonome le long de la trajectoire de stationnement (60) vers l'emplacement de stationnement (40),
- lors d'une demande de récupération, une trajectoire de sortie de stationnement (70) peut être transmise au véhicule (20) de manière à ce que le véhicule (20) puisse effectuer un processus de sortie de stationnement autonome le long de la trajectoire de sortie de stationnement (70).

3. Système de gestion d'espaces de stationnement (10) selon la revendication 2, **caractérisé en ce que** le système de gestion d'espaces de stationnement (10) comporte une unité à mémoire (15), dans lequel la trajectoire de stationnement (60) et/ou la trajectoire de sortie de stationnement (70) est/sont calculée(s) au moyen de l'unité de calcul (12) ou est/sont extraite(s) de l'unité à mémoire (15).

4. Système de gestion d'espaces de stationnement (10) selon l'une quelconque des revendications 2 ou 3, **caractérisé en ce que**, lors du calcul de la trajectoire de stationnement (60) et/ou de la trajectoire de sortie de stationnement (70), au moins l'un des paramètres suivants est pris en compte : type de véhicule, situation météorologique, positions d'objets dans l'environnement du véhicule.

5. Système de gestion d'espaces de stationnement (10) selon l'une quelconque des revendications 1 à 4, **caractérisé en ce que** le système de gestion d'espaces de stationnement (10) est conçu pour proposer plusieurs possibilités de sélection de la position de récupération (35) et/ou du temps de récupération et pour les transmettre par l'intermédiaire de la liaison de communication à l'appareil mobile (55).

6. Véhicule (20) comportant une fonction de voiturier comprenant des moyens de communication (27) destinés à envoyer et recevoir des données vers et en provenance d'un système de gestion d'espaces de stationnement (10) selon l'une quelconque des revendications 1 à 5, **caractérisé en ce que** le véhicule (20) comporte un système destiné au stationnement autonome (25) et est conçu pour se déplacer de manière autonome, après qu'une position de dépôt prédéterminée (30) a été atteinte, le long d'une trajectoire de stationnement (60), notamment transmise par le système de gestion d'espaces de stationnement (10), vers un emplacement de stationnement (40) attribué par le système de gestion d'espaces de stationnement (10), et **en ce que** le véhicule est conçu pour se déplacer de manière autonome, après qu'un signal de début a été reçu en provenance du système de gestion d'espaces de stationnement (10), le long d'une trajectoire de sortie de stationnement (70), notamment transmise par le système de gestion d'espaces de stationnement (10), depuis l'emplacement de stationnement (40) vers une position de récupération (35) prédéterminée, dans lequel un temps de récupération prédéterminé est pris en compte.

7. Véhicule (20) selon la revendication 6, **caractérisé en ce que** le véhicule comporte un système de détection d'environnement doté de capteurs d'environnement (22), notamment de capteurs à ultrasons et/ou de capteurs radars et/ou d'une ou plusieurs caméras.

8. Procédé d'assistance au stationnement d'un conducteur (50) d'un véhicule (20) selon l'une quelconque des revendications 6 ou 7, comprenant les étapes consistant à :
- établir une liaison de communication entre un appareil mobile (55) et/ou le véhicule (20) et un système de gestion d'espaces de stationnement (10) qui est réalisé selon l'une quelconque des revendications 1 à 4,
- envoyer une demande de stationnement du véhicule (20) et/ou de l'appareil mobile (55) au système de gestion d'espaces de stationnement (10),
- attribuer un emplacement de stationnement (40) au moyen du système de gestion d'espaces de stationnement (10),
- amener le véhicule (20) à l'emplacement de stationnement (40) attribué,
**caractérisé par** les étapes consistant à :
- envoyer une demande de récupération de l'appareil mobile (55) au système de gestion d'espace de stationnement (10), dans lequel une position de récupération (35) et un temps de récupération sont prédéterminés,
- amener le véhicule (20) de l'emplacement de stationnement (40) à la position de récupération (35) prédéterminée en tenant compte du temps de récupération prédéterminé.

9. Procédé selon la revendication 8, dans lequel une trajectoire de stationnement (60) et/ou une trajectoire de sortie de stationnement (70) est/sont déterminée(s) par le système de gestion d'espaces de stationnement (10) et transmise(s) au véhicule (20), dans lequel le véhicule (20) se déplace de manière autonome le long de la trajectoire de stationnement (60) d'une position de dépôt (30) vers un emplacement de stationnement (40) et/ou dans lequel le véhicule se déplace de manière autonome le long de la trajectoire de sortie de stationnement (70) de l'emplacement de stationnement (40) vers la position de récupération (35) prédéterminée.

10. Procédé selon la revendication 8, **caractérisé en ce que** la trajectoire de stationnement (60) et/ou la trajectoire de sortie de stationnement (70) est/sont calculée(s) par une unité de calcul (12) du système de gestion d'espaces de stationnement (10).

11. Procédé selon la revendication 8, **caractérisé en ce que** la trajectoire de stationnement (60) et/ou la trajectoire de sortie de stationnement (70) est/sont extraite(s) d'une unité à mémoire (12) du système de gestion d'espaces de stationnement (10).
